(19) Europäisches Patentamt

European Patent Office

Office européen des brevets

(11) EP 0 843 190 B1

(12) EUROPÄISCHE PATENTSCHRIFT

(45) Veröffentlichungstag und Bekanntmachung des Hinweises auf die Patenterteilung:
**17.12.2003 Patentblatt 2003/51**

(51) Int Cl.⁷: $G02B\ 15/04$, G02B 13/14

(21) Anmeldenummer: 97117670.6

(22) Anmeldetag: 13.10.1997

(54) **Modulares Infrarot-Kepler-Fernrohr**

Modular infrared Kepler telescope

Lunette d'approche de Kepler modulable pour l'infrarouge

(84) Benannte Vertragsstaaten:
**DE FR GB**

(30) Priorität: **15.11.1996 DE 19647273**

(43) Veröffentlichungstag der Anmeldung:
**20.05.1998 Patentblatt 1998/21**

(73) Patentinhaber: **Zeiss Optronik GmbH
73447 Oberkochen (DE)**
Benannte Vertragsstaaten:
**DE FR**

(72) Erfinder: **Ulrich, Wilhelm
73434 Aalen (DE)**

(74) Vertreter: **Gnatzig, Klaus
Carl Zeiss
Patentabteilung
73446 Oberkochen (DE)**

(56) Entgegenhaltungen:
**DE-A- 3 110 797          US-A- 4 695 119
US-A- 4 715 692**

• **PATENT ABSTRACTS OF JAPAN vol. 008, no. 068 (P-264), 30. März 1984 (1984-03-30) & JP 58 215618 A (CANON KK), 15. Dezember 1983 (1983-12-15)**

**Beschreibung**

Die Erfindung betrifft ein infrarot-taugliches Kepler-Fernrohr, d.h. also ein afokales optisches System mit Zwischenabbildung bestehend aus einem Objektiv und einem Okular. Solche Optiken werden z.B. in Wärmebildgeräte eingebaut.

Aus A. Mann, Optical Engineering 31 (1992), 1064 ff. (Seite 1065, Abschnitt 2.2) ist ein modular aufgebauter Zoom-Reimager mit austauschbarer Kompensator/Okular-Einheit bekannt.

US 5,044,706 gibt ein Teleskop (Galilei, afokal) mit Brennweiten-(Sehfeld-)Wechsel durch einsetzbare Linsengruppen an. Diffraktive optische Elemente (DOE) und Asphären sind bei den Zusatzlinsen und beim Basisobjektiv vorgesehen.

US 5,214,532 beschreibt einen achromatischen zweilinsigen Vorsatz für Wärmebildgeräte zur Verdopplung der Reichweite. Asphären sind vorgesehen.

US 5,229,880 beschreibt einen Reimager, der für drei Sehfelder ausgelegt ist, und zwar durch Weglassen oder Einsetzen einer ersten oder zweiten zweilinsigen Gruppe hinter der Frontlinse des Objektivs. Diese Gruppe hat in den Beispielen mindestens ein DOE, Anspruch 9 umfaßt aber auch Varianten ohne DOE.

US 5,257,133 beschreibt einen Reimager mit DOE im Okular (claim 1) bzw. nirgendwo (claim 10) und/oder Asphären in Objektiv und Okular (claim 18) aus Silizium, also für 3-5 μm Wellenlänge. Eine Wechseloptik ist nicht vorgesehen.

US 5,363,235 beschreibt einen katadioptrischen Reimager mit wechselbaren Linsen zur Bildfeldschaltung.

Aufgabe der Erfindung ist es, die Konstruktion eines derartigen Fernrohres anzugeben, die an den Einsatz in Wärmebildgeräten angepaßt ist und bei kompakter Bauform mit möglichst wenig Linsen ein kostengünstig zu fertigendes System mit Wechselkomponenten für verschiedene Sehfelder ergibt.

Gelöst wird diese Aufgabe durch ein Kepler-Fernrohr nach Anspruch 1, oder, in alternativer Darstellung, das afokale System nach Anspruch 5.

Anspruch 16 gibt das entsprechende Verfahren zur Erzeugung eines bedarfsgerechten Sehfelds bei Kepler-Fernrohren an.

Erfindungsgemäß wird bei einer Satzoptik zur Darstellung von Kepler-Fernrohren die Schnittstelle zwischen fester Grundoptik und angepaßten Teilen vor die negative Hintergruppe des Objektivs gelegt und an dieser Stelle wird eine bestimmte Korrektion vorgesehen, insbesondere sind sphärische Aberration und Koma unterkorrigiert.

Vorteilhafte Ausführungsformen sind Gegenstand der Unteransprüche 2 bis 4, 6 bis 15 und 17.

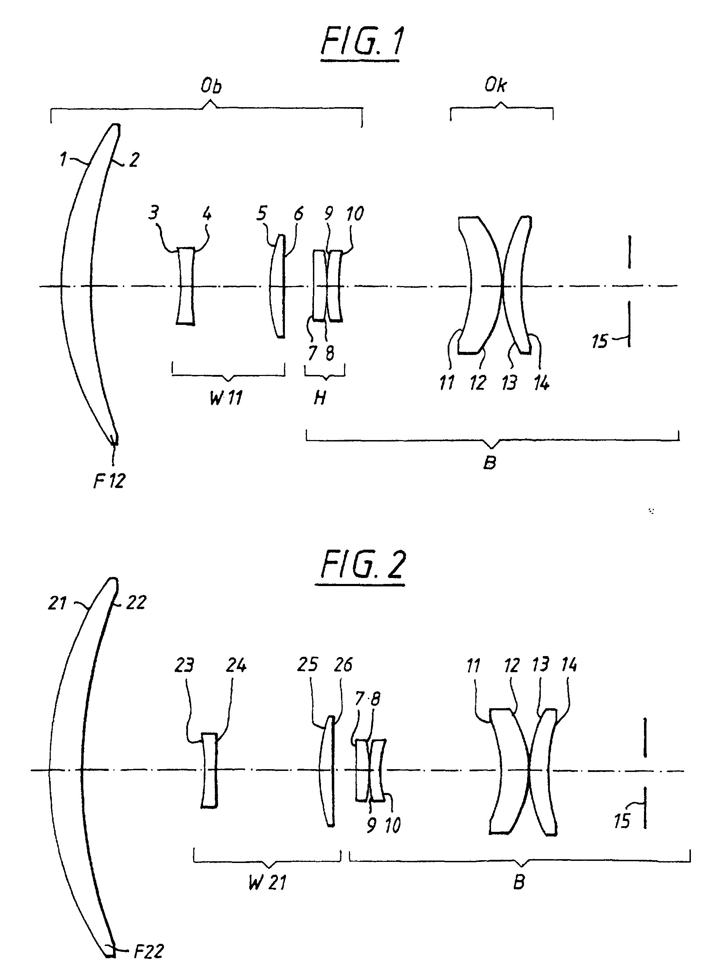

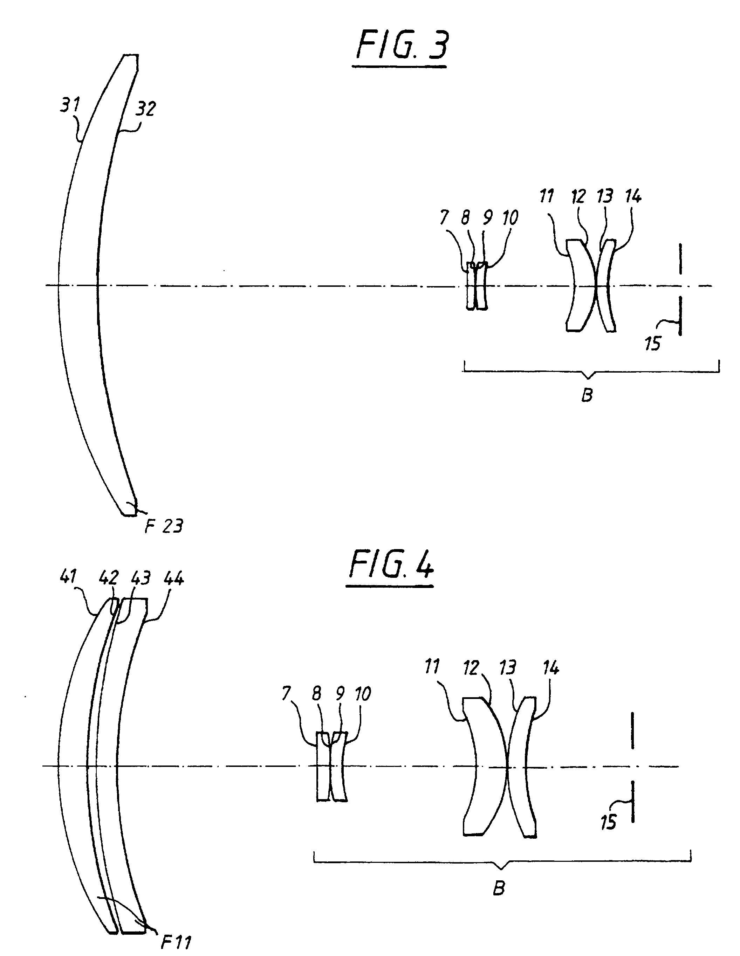

Näher erläutert wird die Erfindung anhand der Ausführungsbeispiele, deren Linsenschnitte in den Figuren 1 bis 6 der Zeichnung dargestellt sind.

Das Beispiel der Figur 1 zeigt die Zusammensetzung des Kepler-Fernrohrs aus Objektiv Ob mit sammelnder Frontgruppe F12, optimaler Wechseloptik W11 und zerstreuender Hintergruppe H, sowie aus dem Okular Ok. Okular Ok und Hintergruppe H bilden die festgelegte Basisoptik B. Die Frontgruppe F12 und die Wechseloptik W11 sind tauschbar, wobei vorgesehen ist, daß die Frontgruppe F12 einmal gewählt und fest mit der Basisoptik B verbunden wird, die Wechseloptik W11 aber, eventuell auch mehrere verschiedene, im Betrieb einschwenkbar ist mit einer geeigneten Mechanik.

Die Basisoptik B besteht aus der Hintergruppe H mit einer sphärischen Sammellinse 7, 8 aus ZnS und einer sphärischen Zerstreuungslinse 9, 10 aus Ge. Die Brennweite der Hintergruppe H liegt bei -18 mm und sie steht so im Strahlengang, daß sie eine zweifache Vergrößerung bewirkt.. Das Zwischenbild zwischen Hintergruppe H und Okular Ok ist nicht korrigiert.

Das Okular Ok enthält zwei asphärische (11, 12; 13, 14) Sammellinsen aus Ge, ausgeführt als einander zugewandte Menisken. Seine Brennweite beträgt ca. +22 mm.

Die Frontgruppe F12 ist hier eine sammelnde Einzellinse 1, 2 aus Germanium mit diffraktiver Fläche 2.

Die eingeschobene Wechseloptik W11 besteht aus einer sphärischen Zerstreuungslinse 3, 4 und einer Sammellinse 5, 6 mit asphärischer Fläche 6, beide ebenfalls aus Germanium.

Die Tabelle 1a gibt für alle Teile des Fernrohrs die Konstruktionsdaten.

Die Austrittspupille 15 ist mit ihrem Durchmesser (10 mm) fest vorgegeben.

Die asphärischen und diffraktiven Flächen sind dabei folgendermaßen beschrieben:

Einer sphärischen Fläche mit dem Radius R wird eine rotationssymmetrische, asphärische Deformation überlagert. Diese wird als Pfeilhöhendifferenz pD der Asphäre zur sphärischen Fläche angegeben und ist eine Funktion des Abstandes h von der optischen Achse. Die Kegelschnittgrundform ist bei allen Beispielen eine Parabel, so daß sich mit den asphärischen Konstanten $c_1$ bis $c_n$ folgende Formel ergibt:

$$pD(h) = (1/2R)\, h^2 + c_1\, h^4 + ... + c_n\, h^{2n+2}\ .$$

Das gegebenenfalls überlagerte diffraktive Furchenprofil ist eine Funktion des Abstandes h von der optischen Achse und wiederholt sich periodisch immer bis zur maximalen Furchentiefe T.

Der diffraktive Abtrag pD(h) wird für die Ausführungsbeispiele folgendermaßen berechnet:

$$pD(h) = T \cdot (N(b) - \text{Integer } N(h),$$

mit der maximalen Furchentiefe $T = WL/(n-1)$ und der Furchenzahl $N(h) = D_1 (h^2)/WL$.

Dabei bedeuten:

- WL = Blazewellenlänge: hier WL = 9 $\mu$m
- n = Brechzahl der Linse
- $D_1$ = diffraktive Konstante

Dafür sind die Konstanten in den Tabellen angegeben.

**Tabelle 1a**

Objektiv-Frontgruppe F12

| Nr. | Radius | Dicke | Glas | C1 | C2 | C3 | C4 | D1 |
|---|---|---|---|---|---|---|---|---|
| 1 | 96.450 | 8.0 | Ge | - | - | - | - | - |
| 2. | 140.827 | 27.6 | Luft | 0.60e-07 | -0.72e-12 | 0.11e-14 | -0.17e-18 | -0.16e-04 |

Wechseloptik W11

| Nr. | Radius | Dicke | Glas | C1 | C2 | | |
|---|---|---|---|---|---|---|---|
| 3 | -122.117 | 3.6 | Ge | - | - | | |
| 4 | 174.267 | 23.2 | Luft | - | - | (Dehnungsfaktor 1 : 3,4) | |
| 5 | 53.727 | 4.3 | Ge | -0.10e-05 | -0.16e-10 | | |
| 6 | 1163.840 | 9.4 | Luft | - | - | | |

Objektiv-Hintergruppe H

| Nr. | Radius | Dicke | Glas |
|---|---|---|---|
| 7 | -501.449 | 4.0 | ZnSe |
| 8 | -210.068 | 0.2 | Luft |
| 9 | 110.868 | 3.5 | Ge |
| 10 | 40.794 | 42.0 | Luft |

Okular Ok

| Nr. | Radius | Dicke | Glas | C1 | C2 | C3 |
|---|---|---|---|---|---|---|
| 11 | -39.094 | 9.5 | Ge | -0.13e-04 | 0.19e-07 | -0.18e-10 |
| 12 | -33.874 | 0.2 | Luft | - | - | - |
| 13 | 48.179 | 5.5 | Ge | - | - | - |
| 14 | 60.000 | 33.0 | Luft | -0.59e-05 | 0.12e-07 | -0.90e-11 |

EP 0 843 190 B1

## Tabelle 1b

| Variante | Aufbau | Gamma | EPD | f' | Figur | Tabelle |
|---|---|---|---|---|---|---|
| F11 | asphärische Sammellinse aus Ge und sphärische Zerstreuungslinse aus ZnSe | 9,0 | 90 mm | ca. 200 mm | 4 | 4 |
| F12 | diffraktive Sammellinse aus Ge | 9,0 | 90 mm | ca. 200 mm | 1 | 1a |
| F21 | asphärische Sammellinse aus Ge und sphärische Zerstreuungslinse aus ZnSe | 11,7 | 117 mm | ca. 255 mm | 5 | 5 |
| F22 | diffraktive Sammellinse aus Ge | 11,7 | 117 mm | ca. 255 mm | 2 | 2 |
| F31 | asphärische Sammellinse aus Ge und sphärische Zerstreuungslinse aus ZnSe | 20,0 | 200 mm | ca. 435 mm | 6 | 6 |
| F23 | diffraktive Sammellinse aus Ge | 20,0 | 200 mm | ca. 435 mm | 3 | 3 |

EP 0 843 190 B1

## Tabelle 2

F22

| Nr. | Radius | Dicke | Glas | C1 | C2 | C3 | C4 | D1 |
|---|---|---|---|---|---|---|---|---|
| 21 | 125.139 | 10.3 | Ge | - | - | - | - | - |
| 22 | 183.377 | 52.0 | Luft | 0.27e-07 | 0.24e-12 | 0.71e-16 | -0.73e-20 | -0.13e-04 |

W21

| Nr. | Radius | Dicke | Glas | C1 | C2 | C3 | C4 | D1 |
|---|---|---|---|---|---|---|---|---|
| 23 | -84.054 | 3.6 | Ge | | | | | |
| 24 | 343.579 | 35.0 | Luft | - | - | | | |
| 25 | 49.380 | 4.3 | Ge | -0.81e-06 | -0.99e-10 | | | |
| 26 | 392.240 | 9.4 | Luft | - | - | | | |

## Tabelle 3

F23

| Nr. | Radius | Dicke | Glas | C1 | C2 | C3 | C4 | D1 |
|---|---|---|---|---|---|---|---|---|
| 31 | 216.154 | 17.8 | Ge | - | - | - | - | - |
| 32 | 318.359 | 129.1 | Luft | 0.54e-08 | 0.46e-13 | -0.14e-17 | 0.50e-22 | -0.77e-05 |

EP 0 843 190 B1

**Tabelle 4**

F11

| Nr. | Radius | Dicke | Glas | C1 | C2 | C3 |
|---|---|---|---|---|---|---|
| 41 | 98.296 | 9.0 | Ge | | | |
| 42 | 150.469 | 2.5 | Luft | +0.50e-07 | -0.54e-12 | +0.39e-15 |
| 43 | 183.265 | 6.0 | ZnSe | - | - | - |
| 44 | 155.888 | 20.2 | Luft | - | - | - |

**Tabelle 5**

F21

| Nr. | Radius | Dicke | Glas | C1 | C2 | C3 |
|---|---|---|---|---|---|---|
| 51 | 124.154 | 11.5 | Ge | - | - | - |
| 52 | 189.838 | 23.7 | Luft | 0.25e-07 | 0.83e-13 | 0.35e-16 |
| 53 | 221.920 | 7.0 | ZnSe | - | - | - |
| 54 | 176.808 | 20.7 | Luft | - | - | - |

EP 0 843 190 B1

**Tabelle 6**

F31

| Nr. | Radius | Dicke | Glas | C1 | C2 | C3 |
|---|---|---|---|---|---|---|
| 61 | 189.55 | 20.0 | Ge | - | - | - |
| 62 | 281.113 | 82.4 | Luft | 0.68e-08 | 0.40e-13 | 0.47e-19 |
| 63 | 509.879 | 9.0 | ZnSe | - | - | - |
| 64 | 257.738 | 21.7 | Luft | - | - | - |

In der Tabelle 1b sind die für ein Ausführungsbeispiel bereitgestellten Varianten von Frontgruppen F11 bis F 31 beschrieben, welche auch in den Linsenschnitten Figuren 1 bis 6 und in den zugehörigen Tabellen 1a, 2 bis 6 beschrieben sind. Alle Frontgruppen kommen mit zwei Linsen mit einer Asphäre oder gar mit einer Linse, dann mit diffraktiver Fläche, aus.

Gamma ist die Vergrößerung des gesamten Fernrohrs, EPD der Eintrittspupillendurchmesser, f' die Brennweite des Objektivs Ob mit den jeweiligen Frontgruppen F11 bis F31.

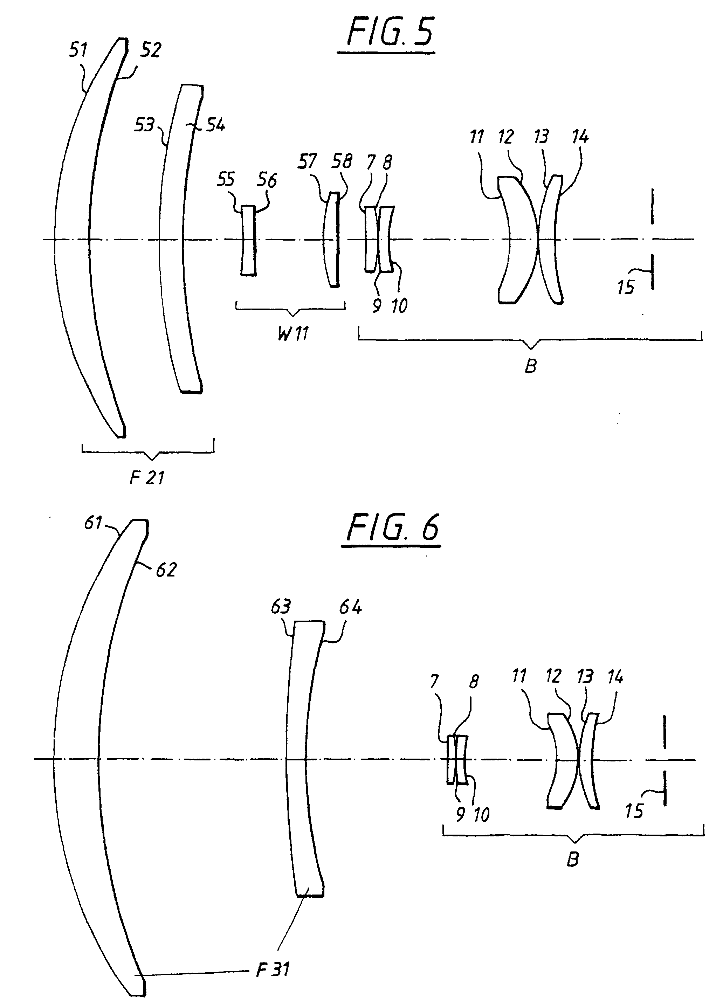

Zwei damit kombinierbare Wechseloptiken W11, W21 sind durch eine sphärische Zerstreuungslinse 3, 4 und eine asphärische Sammellinse 5, 6 aus Germanium gebildet. Bei einer Baulänge von ca. 30 mm hat W11 einen Dehnungsfaktor von 1 : 3,4, W21 bei einer Baulänge von ca. 45 mm einen von 1 : 5,4. W11 ist in Figur 1 und 5 abgebildet und in Tabelle 1a enthalten, W21 ist in Figur 2 und Tabelle 2 näher beschrieben.

Wichtig ist, daß in allen Kombinationen der Frontgruppen F11 bis F31 und Wechseloptiken W11, W21 die Korrektion des Gesamtsystems stabil gut ist und stets an der Übergabestelle zur Basisoptik B die sphärische Aberration und die Koma gleich unterkorrigiert sind.

In den Tabellen 2 bis 6 sind die Linsendaten der verschiedenen Frontgruppen F11 und F21 bis F31, sowie der alternativen Wechseloptik W21 angegeben. Sie sind alle beliebig mit der Hintergruppe H und dem Okular Ok kombinierbar, natürlich sind auch andere Ausführungen und Kombinationen möglich.

Durch die Einführung der Wechseloptiken W11, W21 zur Sehfeldreduzierung wird die Verzeichnung beeinflußt. Beispielsweise ist in Figur 1 die Verzeichnung mit W11 negativ, ohne diese Gruppe aber schwach positiv.

Das Zwischenbild nach dem Objektiv Ob wird bewußt nicht vollständig korrigiert, einzelne Bildfehler werden vielmehr mit dem Okular Ok kompensiert.

Öffnungsfehler und Koma sind vorzugsweise nahezu beugungsbegrenzt korrigiert, die Hintergruppe H kompensiert hier die Unterkorrektion der Frontgruppe F11 bis F31. Der Astigmatismus ist negativ, das heißt, der tangentiale Fokus liegt weiter vor der Zwischenbildebene als der sagittale Fokus. Die Bildfeldwölbung ist leicht positiv und viel kleiner als der Astigmatismus. Die Pupillenaberration ist durch die Kompensation der Frontgruppe F11 bis F31 durch die Hintergruppe H korrigiert.

Beim Okular Ok dienen die zwei Menisken 11, 12; 13, 14 dazu, die Bildfeldwölbung klein zu halten. Der Petzvalradius des Okulars Ok kann damit deutlich (hier ca. siebenmal) größer als die Brennweite des Okulars Ok gemacht werden. Die Außenflächen sind konkav. Damit kann das Okular Ok die Bildfehler des Objektivs Ob kompensieren und das System verhält sich unempfindlich gegenüber Fertigungstoleranzen. Mindestens eine asphärische Fläche ist zur Korrektur der Pupillenaberration erforderlich. Ausgewählt sind hier als Asphären die dem Zwischenbild zugewandte konkave Fläche 11 und die der Austrittspupille 15 zugewandte Fläche 14. Diese Korrektur der Pupillenaberration verhindert Vignettierungen bzw. vermeidet Überaperturen der großen Frontlinsen.

Die Konstruktion hat eine insgesamt geringe Empfindlichkeit gegen Fertigungstoleranzen, da die Korrektion entspannt ist. Sie ist kostengünstig, da fast ausschließlich Germanium verwendet wird, sowohl die Linsenzahl als auch die Zahl der Asphären minimal ist, und keine asphärischen Flächen auf toxischen Materialien (ZnSe, Chalkogenidgläser) zu fertigen sind.

Außer Germanium werden im Einzelfall wegen der höheren Dispersion auch ZnS oder ZnSe, sowie Chalkogenidgläser eingesetzt. Die Hintergruppe H bewirkt eine Vergrößerung von mindestens 1,6-fach und hat genügend Luftraum, so daß sie sowohl zur Fokussierung auf nahe Objekte als Innenfokussierung, wie auch zur aktiven Athermalisierung im üblichen Temperaturbereich von -40° C bis +70° C längs verschoben werden kann. Sie kann auch aus nur einer Linse bestehen.

Die beschriebenen Ausführungen sind für den Spektralbereich 7,5 μm bis 10,5 μm vorgesehen und dafür achromatisiert.

Die Erfindung kann jedoch auch im Spektralbereich 3 μm bis 5 μm angewendet werden und basiert dann auf Silizium als Linsenmaterial.

**Patentansprüche**

1. Infrarot-taugliches Kepler-Fernrohr mit Objektiv (Ob) und Okular (Ok),

   - wobei das Objektiv (Ob) aus einer positiven Frontgruppe (F11 - F31) und einer negativen Hintergruppe (H) besteht und zwischen diesen eine Wechseloptik (W11, W21) als Vergrößerungswechsler eingesetzt werden kann,
   - wobei Hintergruppe (H) und Okular (Ok) fest vorgegeben sind und Frontgruppe (F11 - F31) und Wechseloptik (W11, W21) jeweils austauschbar sind,
   - wobei bei jeder Frontgruppe (F11 - F31) mit oder ohne Wechseloptik (W11, W21) die sphärische Aberration und die Koma vor der Hintergruppe (H) gleich unterkorrigiert sind.

2. Fernrohr nach Anspruch 1, **dadurch gekennzeichnet, daß** jede Kombination außer der Verzeichnung insgesamt beugungsbegrenzte Korrektion aufweist.

3. Fernrohr nach Anspruch 1 oder 2, **dadurch gekennzeichnet, daß** die Wechseloptik (W11, W21) ein zweites Sehfeld (WFOV) erzeugt.

4. Fernrohr nach Anspruch 3, **dadurch gekennzeichnet, daß** es mit Wechseloptik (W11, W21) negative Verzeichnung aufweist, ohne diese eine positive Verzeichnung.

5. Afokales optisches System mit Zwischenabbildung bestehend aus einem Objektiv (Ob) und einem Okular (Ok), **dadurch gekennzeichnet, daß** das Objektiv (Ob) als Telesystem bestehend aus einer positiven Frontgruppe (F11 - F31) und einer negativen Hintergruppe (H) ausgebildet ist, dessen Telefaktor Baulänge zu Brennweite (TF) kleiner als 0,7 ist, und daß das Okular (Ok) aus mindestens zwei Linsen (11, 12; 13,14) besteht und der Abstand der reellen Austrittspupille (15) von der Bildebene mindestens 1,3 mal, vorzugsweise über 1,4 mal, größer als die Brennweite des Okulars (Ok) ist und daß zum Vergrößerungswechsel wahlweise die Frontgruppe (F11 - F31) des Objektivs (Ob) gewechselt werden kann oder zwischen Frontgruppe (F11 - F31) und Hintergruppe (H) des Objektivs (Ob) eine mindestens zweilinsige Wechseloptik (W12, W21) eingeschwenkt werden kann.

6. System nach Anspruch 5, **dadurch gekennzeichnet, daß** zwei der Okularlinsen (11, 12; 13,14) so durchgebogen sind, daß der Petzvalradius des Okulars (Ok) mindestens sechsmal so groß ist wie die Okularbrennweite.

7. System nach Anspruch 5 oder 6, **dadurch gekennzeichnet, daß** die positive Frontgruppe (F11 - F31) des Objektivs (Ob) zur Korrektion der chromatischen Längsabweichung (CHL) als zweilinsiges System aus Germanium und einem anderen Material größerer Dispersion, z.B. ZnSe, ZnS oder Chalkogenidgläser, ausgebildet ist.

8. System nach Anspruch 5, **dadurch gekennzeichnet, daß** die Frontgruppe (F23) aus einer einzelnen Linse (31, 32), insbesondere aus Germanium, mit einer diffraktiven Fläche (31) besteht.

9. System nach Anspruch 5, **dadurch gekennzeichnet, daß** die negative Hintergruppe (H) des Objektivs (Ob) aus einer einzelnen Linse, insbesondere aus Germanium, besteht.

10. System nach Anspruch 5, **dadurch gekennzeichnet, daß** die negative Hintergruppe (H) des Objektivs (Ob) zur Korrektion der chromatischen Vergrößerungsdifferenz (CHV) aus einer negativen Ge-Linse und einer positiven Linse aus einem Material größerer Dispersion, insbesondere ZnSe, ZnS, Chalkogenidgläser, besteht.

11. System nach Anspruch 5, **dadurch gekennzeichnet, daß** die negative Hintergruppe (H) nur sphärische Flächen aufweist.

12. System nach mindestens einem der Ansprüche 5-10, **dadurch gekennzeichnet, daß** für die negative Hintergruppe (H) genügend Luftraum zur Verfügung steht, um mit dieser eine Innenfokussierung zur Einstellung auf nahe Objekte und zur aktiven Athermalisierung in einem Temperaturbereich zwischen -40° C und +70° C vorzunehmen.

13. System nach mindestens einem der Ansprüche 5-11, **dadurch gekennzeichnet, daß** die negative Hintergruppe (H) derart im Strahlengang steht, daß sie eine Vergrößerung von mindestens 1,6 mal bewirkt.

14. System nach mindestens einem der Ansprüche 5-12, **dadurch gekennzeichnet, daß** die Frontgruppe (F11 - F31) des Objektivs (Ob) aus einer diffraktiven Zerstreuungslinse aus Germanium und einer positiven Linse aus einem Material mit geringerer temperaturabhängiger Brechzahlvariation, insbesondere ZnSe, ZnS, Chalkogenidgläser besteht, so daß durch die Materialauswahl das System athermalisiert und durch die diffraktive Fläche gleichzeitig achromatisiert wird.

15. System nach mindestens einem der Ansprüche 5-13, **dadurch gekennzeichnet, daß** zur Verwendung im 3-5 μm Spektralbereich als Grundmaterial Silizium statt Germanium verwendet wird.

16. Verfahren zur Erzeugung von infrarot-tauglichen Kepler-Fernrohren mit bedarfsgerechtem Sehfeld, bei dem eine negative Objektiv-Hintergruppe (H) und ein Okular (Ok) mit Überkorrektion von sphärischer Aberration und Koma fest vorgegeben wird, und eine positive Objektiv-Frontgruppe (F11 - F31) dem benötigten Sehfeld entsprechend konstruiert wird.

17. Verfahren nach Anspruch 16, **dadurch gekennzeichnet, daß** eine Wechseloptik (W11, W21) zwischen Frontgruppe (F11 - F31) und Hintergruppe (H) einrückbar vorgesehen ist, welche das Sehfeld schaltbar erweitert und die Korrektion mit Ausnahme der Verzeichnung nicht beeinflußt.

**Claims**

1. Infrared-capable Kepler telescope having an object glass (Ob) and eyepiece (Ok),

   - the object glass (Ob) consisting of a positive front group (F11 - F31) and a negative rear group (H), and it being possible to insert between these a changing optical device (W11, W21) as a magnification changer,
   - the rear group (H) and eyepiece (Ok) being permanently prescribed, and the front group (F11 - F31) and changing optical device (W11, W21) being exchangeable in each case,

- the spherical aberration and the coma in front of the rear group (H) being equally undercorrected in the case of each front group (F11 - F31) with or without changing optical devices (W11, W21).

2. Telescope according to Claim 1, **characterized in that** each combination apart from distortion has overall diffraction-limited correction.

3. Telescope according to Claim 1 or 2, **characterized in that** the changing optical device (W11, W21) generates a second field of view (WFOV).

4. Telescope according to Claim 3, **characterized in that** with a changing optical device (W11, W21) it has a negative distortion, and without it a positive distortion.

5. Afocal optical system with intermediate imaging, comprising an object glass (Ob) and an eyepiece (Ok), **characterized in that** the object glass (Ob) is designed as a telesystem consisting of a positive front group (F11 - F31) and a negative rear group (H) whose telefactor of overall length to focal length (TF) is less than 0.7, and **in that** the eyepiece (Ok) consists of at least two lenses (11, 12; 13, 14) and the distance between the real exit pupil (15) and the image plane is at least 1.3 times, preferably more than 1.4 times, greater than the focal length of the eyepiece (Ok), and **in that** for the purpose of magnification change it is optionally possible to change the front group (F11 - F31) of the object glass (Ob), or to swivel a changing optical device (W12, W21) having at least two lenses in between the front group (F11 - F31) and rear group (H) of the object glass (Ob).

6. System according to Claim 5, **characterized in that** two of the eyepiece lenses (11, 12; 13, 14) are bent to such an extent that the Petzval radius of the eyepiece (Ok) is at least six times as large as the eyepiece focal length.

7. System according to Claim 5 or 6, **characterized in that** the positive front group (F11 - F31) of the object glass (Ob) is designed for the purpose of correcting the chromatic longitudinal aberration (CHL) as a two-lens system made from germanium and a different material of greater dispersion, for example ZnSe, ZnS or chalkogenide glasses.

8. System according to Claim 5, **characterized in that** the front group (F23) consists of a single lens (31, 32), in particular made from germanium, having a diffractive surface (31).

9. System according to Claim 5, **characterized in that** the negative rear group (H) of the object glass (Ob) consists of a single lens, in particular made from germanium.

10. System according to Claim 5, **characterized in that** the negative rear group (H) of the object glass (Ob) consists for the purpose of correcting the chromatic difference in magnification (CHV) of a negative Ge lens and a positive lens made from a material of greater dispersion, in particular ZnSe, ZnS, chalkogenide glasses.

11. System according to Claim 5, **characterized in that** the negative rear group (H) has only spherical surfaces.

12. System according to at least one of Claims 5-10, **characterized in that** sufficient air clearance is available for the negative rear group (H) in order to use the latter to perform internal focussing to set to new objects and to undertake active athermalization in a temperature range of between -40°C and +70°C.

13. System according to at least one of Claims 5-11, **characterized in that** the negative rear group (H) is positioned in the beam path in such a way that it effects a magnification of at least 1.6 times.

14. System according to at least one of Claims 5-12, **characterized in that** the front group (F11 - F31) of the object glass (Ob) consists of a diffractive dispersing lens made from germanium, and a positive lens made from a material with lower, temperature-dependent refractive index variation, in particular ZnSe, ZnS, chalkogenide glasses, such that the system is athermalized and simultaneously achromatized by the diffractive surface through the choice of material.

15. System according to at least one of Claims 5-13, **characterized in that** silicon is used instead of germanium as basic material for the purpose of use in the 3-5 μm spectral region.

16. Method for producing infrared-capable Kepler telescopes with a required field of view, in the case of which a negative object glass rear group (H) and an eyepiece (Ok) with overcorrection of spherical aberration and coma are permanently prescribed, and a positive object glass front group (F11 - F31) is designed in accordance with the required field of view.

**17.** Method according to Claim 16, **characterized in that** a changing optical device (W11, W21) is provided such that it can be engaged between the front group (F11 - F31) and rear group (H), which device switchably expands the field of view and does not influence the correction, with the exception of the distortion.

**Revendications**

**1.** Lunette d'approche de Kepler modulable pour l'infrarouge avec un objectif (Ob) et un oculaire (Ok),

- dans laquelle l'objectif (Ob) se compose d'un groupe antérieur positif (F11 - F31) et d'un groupe postérieur négatif (H) et dans laquelle une optique interchangeable (W11, W21) peut être installée entre ceux-ci comme moyen de changement du grossissement,
- dans laquelle le groupe postérieur (H) et l'oculaire (Ok) sont prédéterminés de manière fixe et le groupe antérieur (F11 - F31) et l'optique interchangeable (W11, W21) peuvent chaque fois être échangés,
- dans laquelle, pour chaque groupe antérieur (F11 - F31) avec ou sans optique interchangeable (W11, W21), l'aberration sphérique et le coma peuvent être également sous-corrigés avant le groupe postérieur (H).

**2.** Lunette d'approche selon la revendication 1, **caractérisée en ce que** chaque combinaison présente, à l'exception de la distorsion d'image, au total une correction limitée par la courbure.

**3.** Lunette d'approche selon la revendication 1 ou 2, **caractérisée en ce que** l'optique interchangeable (W11, W21) produit un deuxième champ de vision (WFOV).

**4.** Lunette d'approche selon la revendication 3, **caractérisée en ce qu'**elle présente avec l'optique interchangeable (W11, W21) une distorsion d'image négative, et sans elle une distorsion d'image positive.

**5.** Système optique afocal avec image intermédiaire, se composant d'un objectif (Ob) et d'un oculaire (Ok), **caractérisé en ce que** l'objectif (Ob) forme un télésystème composé d'un groupe antérieur positif (F11 - F31) et d'un groupe postérieur négatif (H), dont le téléfacteur longueur sur distance focale (TF) est inférieur à 0,7, et **en ce que** l'oculaire (Ok) se compose d'au moins deux lentilles (11, 12; 13, 14) et la distance de la pupille réelle de sortie (15) au plan de l'image est au moins 1,3 fois, de préférence plus de 1,4 fois plus grande que la distance focale de l'oculaire (Ok) et **en ce que** l'on peut au choix, pour le changement de grossissement, changer le groupe antérieur (F11 - F31) de l'objectif (Ob) ou insérer entre le groupe antérieur (F11 - F31) et le groupe postérieur (H) de l'objectif (Ob) une optique interchangeable (W12, W21) comprenant au moins deux lentilles.

**6.** Système selon la revendication 5, **caractérisé en ce que** deux des lentilles de l'oculaire (11, 12; 13, 14) sont courbées de telle façon que le rayon de Petzval de l'oculaire (Ok) soit au moins six fois plus grand que la distance focale de l'oculaire.

**7.** Système selon la revendication 5 ou 6, **caractérisé en ce que** le groupe antérieur positif (F11 - F31) de l'objectif (Ob) est formé par un système à deux lentilles en germanium et une autre matière à plus forte dispersion, par exemple ZnSe, ZnS ou des verres de chalcogénure, pour la correction de l'écart longitudinal chromatique (CHL).

**8.** Système selon la revendication 5, **caractérisé en ce que** le groupe antérieur (F23) se compose d'une seule lentille (31, 32), en particulier en germanium, avec une face diffractive (31).

**9.** Système selon la revendication 5, **caractérisé en ce que** le groupe postérieur négatif (H) de l'objectif (Ob) se compose d'une seule lentille, en particulier en germanium.

**10.** Système selon la revendication 5, **caractérisé en ce que** le groupe postérieur négatif (H) de l'objectif (Ob) se compose d'une lentille négative en Ge et d'une lentille positive en une matière à plus forte dispersion, en particulier de ZnSe, de ZnS, de verres de chalcogénure, pour la correction de la différence d'agrandissement chromatique (CHV).

**11.** Système selon la revendication 5, **caractérisé en ce que** le groupe postérieur négatif (H) ne présente que des faces sphériques.

**12.** Système selon au moins une des revendications 5-10, **caractérisé en ce que** l'on dispose d'un espace d'air suffisant pour le groupe postérieur négatif (H) pour opérer avec celui-ci une focalisation interne en vue d'une mise au point sur des objets proches et pour l'athermalisation active dans une plage de températures comprise entre -40°C et +70°C.

**13.** Système selon au moins une des revendications 5-11, **caractérisé en ce que** le groupe postérieur négatif (H) se trouve sur le trajet des rayons de telle façon qu'il produise un agrandissement d'au moins 1,6 fois.

**14.** Système selon au moins une des revendications 5-12, **caractérisé en ce que** le groupe antérieur (F11 - F31) de l'objectif (Ob) se compose d'une lentille divergente diffractive en germanium et d'une lentille positive en une matière présentant une plus faible variation de l'indice de réfraction dépendant de la température, en particulier ZnSe, ZnS, verres de chalcogénure, de telle façon que le système soit athermalisé par le choix des matières et en même temps achromatisé par la face diffractive.

**15.** Système selon au moins une des revendications 5-13, **caractérisé en ce que**, pour l'utilisation dans le domaine spectral 3-5 µm, on emploie comme matière de base du silicium au lieu de germanium.

**16.** Procédé de production de lunettes d'approche de Kepler modulables pour l'infrarouge avec champ de vision adaptable selon les besoins, dans lequel un groupe postérieur d'objectif négatif (H) et un oculaire (Ok) avec sur-correction de l'aberration sphérique et du coma est prédéterminé de façon fixe, et un groupe antérieur d'objectif positif (F11 - F31) est construit en fonction du champ de vision requis.

**17.** Procédé selon la revendication 16, **caractérisé en ce qu'**il est prévu une optique interchangeable (W11, W21) insérable entre le groupe antérieur (F11 - F31) et le groupe postérieur (H), qui élargit le champ de vision de façon commutable et n'influence pas la correction à l'exception de la distorsion d'image.

## FIG.1

## FIG.2

## FIG. 3

## FIG. 4

## FIG.5

## FIG.6